(19) Europäisches Patentamt / European Patent Office / Office européen des brevets

(11) **EP 3 017 172 B1**

(12) **FASCICULE DE BREVET EUROPEEN**

(45) Date de publication et mention de la délivrance du brevet:
**06.03.2019 Bulletin 2019/10**

(21) Numéro de dépôt: **14745205.6**

(22) Date de dépôt: **02.07.2014**

(51) Int Cl.:
**F02K 9/34** *(2006.01)*      **F02K 9/97** *(2006.01)*

(86) Numéro de dépôt international:
**PCT/FR2014/051700**

(87) Numéro de publication internationale:
**WO 2015/001260 (08.01.2015 Gazette 2015/01)**

(54) **DISPOSITIF DE LIAISON ENTRE DEUX SEGMENTS D'UNE TUYÈRE PROPULSIVE**

VORRICHTUNG ZUM VERBINDEN ZWEIER ABSCHNITTE EINER SCHUBDÜSE

DEVICE FOR CONNECTING TWO SEGMENTS OF A PROPELLING NOZZLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2013 FR 1356554**

(43) Date de publication de la demande:
**11.05.2016 Bulletin 2016/19**

(73) Titulaire: **ARIANEGROUP SAS**
**75015 Paris (FR)**

(72) Inventeurs:
• **INDERSIE, Dominique**
  **27200 Vernon (FR)**
• **GUICHARD, Didier**
  **27120 Menilles (FR)**

(74) Mandataire: **Calvo de Nó, Rodrigo et al**
  **Cabinet Beau de Loménie**
  **158, rue de l'Université**
  **75340 Paris Cedex 07 (FR)**

(56) Documents cités:
**FR-A1- 2 699 970      FR-A1- 2 832 762**
**US-A- 3 212 257**

**Description**

La présente invention concerne le domaine des tuyères propulsives, et particulièrement celui des tuyères de moteur fusée. Plus spécifiquement, la présente liaison concerne l'assemblage d'une tuyère propulsive comprenant un premier segment et un deuxième segment, lesdits premier et deuxième segments étant réalisés en matériaux thermiquement dissimilaires.

On entend par tuyère propulsive une tuyère présentant une forme appropriée pour produire une poussée par accélération d'un fluide propulsif en direction opposée à celle de la poussée. Dans la description qui suit les termes "amont" et "aval" sont définis par rapport au sens de circulation normal du fluide propulsif à travers de la tuyère, et les termes "intérieur" et "extérieur" indiquent la région à l'intérieur et à l'extérieur de la tuyère, respectivement.

Les tuyères propulsives peuvent notamment être convergentes, pour des fluides non-compressibles ou n'atteignant que des vitesses subsoniques, ou convergentes-divergentes, pour des fluides propulsifs compressibles atteignant des vitesses supersoniques. Les moteurs fusées comportent normalement des tuyères propulsives convergentes-divergentes directement en aval de chambres de combustion. L'expansion de gaz de combustion chauds sortant de la chambre de combustion à travers la tuyère propulsive permet la conversion de leur énergie thermique en énergie cinétique. En conséquence, les tuyères propulsives de moteurs fusées sont typiquement soumises à des contraintes thermiques extrêmes, puisque directement en contact avec ces gaz de combustion.

D'autre part, afin de pouvoir augmenter la charge utile propulsée, il convient d'alléger autant que possible la tuyère. Pour cela, une possibilité est l'utilisation de segments en matériaux différents en fonction des contraintes thermiques et mécaniques sur chaque segment. Ainsi, par exemple, un segment amont de la tuyère peut être au moins partiellement réalisé en métal, afin de mieux permettre l'évacuation de la chaleur transmise aux parois de la tuyère par les gaz de combustion, tandis qu'un segment aval, et notamment un segment divergent de la tuyère, où les gaz de combustion sont sensiblement moins chauds après leur expansion et accélération au-delà de la vitesse du son, peut être en un matériau composite plus léger pour une tenue mécanique comparable. Un dispositif de liaison de deux segments d'une tuyère propulsive en matériaux thermiquement dissimilaires est par exemple divulgué dans la publication de demande de brevet français n° FR 2 699 970 A1.

Les différentes caractéristiques thermiques de ces matériaux peuvent toutefois poser d'importants inconvénients. En particulier, la liaison physique entre les segments peut être soumise à de grandes contraintes thermiques et mécaniques à cause des propriétés thermiques dissimilaires des matériaux des deux segments.

Ainsi, les coefficients de dilatation thermique différents peuvent provoquer d'importantes contraintes mécaniques sur la liaison entre les deux segments. En outre, la différence entre les conductivités thermiques des deux matériaux peut aussi provoquer des fortes différences de température à proximité de la jonction entre les deux segments.

Objet et résumé de l'invention

Suivant un premier aspect, la présente divulgation vise à proposer un dispositif pour relier un premier segment et un deuxième segment d'une tuyère propulsive en matériaux thermiquement dissimilaires qui fournisse une connexion mécanique hautement fiable entre lesdits segments de tuyère même sous des fortes contraintes thermiques.

Ce but est atteint grâce au fait que ce dispositif de liaison comprend au moins une goupille avec une première surface axisymétrique destinée à être logée dans un orifice radial du premier segment de tuyère et une deuxième surface axisymétrique excentrée par rapport à la première, et une douille excentrique présentant une surface axisymétrique intérieure complémentaire de la deuxième surface axisymétrique de la goupille, et une surface axisymétrique extérieure, excentrée par rapport à ladite surface axisymétrique intérieure et destinée à être logée dans un orifice radial du deuxième segment de tuyère. L'orientation radiale de la goupille lorsqu'elle est logée dans les orifices des deux segments de tuyère pour les relier permet d'éviter des gradients thermiques importants même quand les températures des parois internes des deux segments de tuyère sont très différentes à proximité de leur jonction. D'autre part, l'excentricité entre les deux surfaces axisymétriques de la goupille d'une part, et entre les deux surfaces axisymétriques de la douille d'autre part permet un ajustement, dans un plan perpendiculaire à la goupille, de la position de la première surface axisymétrique de la goupille par rapport à la surface axisymétrique extérieure de la douille, pour relier les deux segments même si leurs orifices radiaux ne sont pas parfaitement alignés, suite par exemple à une précontrainte axiale devant être maintenue entre les deux segments de tuyère pour assurer une liaison mécanique constante entre les segments de tuyère.

En particulier, les axes de symétrie des surfaces axisymétriques intérieure et extérieure de la douille excentrique peuvent présenter sensiblement le même décalage entre eux que les axes de symétrie des première et deuxième surfaces axisymétriques de la goupille. Ainsi, une rotation conjointe de la douille excentrique et de la goupille permettra un ajustement de la position relative des orifices radiaux des deux segments uniquement en une direction parallèle à un axe central de la tuyère, sans nécessairement provoquer un déplacement relatif correspondant en direction tangentielle.

Afin de retenir la goupille après sa mise en place entre les deux segments de tuyère, le dispositif de liaison peut comprendre en outre au moins un organe de rétention axiale de ladite goupille, éventuellement complété par des organes de fixation de ladite pièce de rétention axiale à l'un desdits segments de tuyère.

Au moins une partie desdites surfaces axisymétriques peuvent notamment être cylindriques, afin de faciliter la fabrication et la mise en place de la douille et de la goupille. Toutefois, d'autres formes axisymétriques, par exemple tronconiques, peuvent également être envisagées.

La présente divulgation se rapporte aussi à une tuyère propulsive comprenant un premier segment et un deuxième segment de tuyère en matériaux thermiquement dissimilaires, comprenant chacun un épaulement radial en appui contre un épaulement radial correspondant de l'autre desdits segments, ainsi qu'une pluralité d'orifices radiaux en regard à des orifices correspondants de l'autre desdits segments, et une pluralité des dispositifs de liaison susmentionnés, dont la première surface axisymétrique de la goupille de chacun est logée dans un desdits orifices radiaux du premier segment, et la douille excentrique respective dans l'orifice radial correspondant du deuxième segment, la deuxième surface axisymétrique de la goupille coopérant avec la surface axisymétrique intérieure de la douille excentrique. Ces dispositifs de liaison peuvent ainsi maintenir une précontrainte axiale d'appui entre les deux segments de manière à maintenir une forte connexion mécanique entre les segments même sous une forte vibration.

Afin de retenir les douilles excentriques à l'intérieur des orifices radiaux du deuxième segment de tuyère après l'assemblage des deux segments, chaque douille excentrique peut être retenue entre une surface extérieure du premier segment de tuyère et un épaulement dans l'orifice radial du deuxième segment de tuyère dans lequel la douille excentrique est logée.

La présente divulgation se rapporte aussi à un moteur fusée avec une telle tuyère propulsive.

Un deuxième aspect de la présente divulgation se rapporte à un procédé de liaison d'un premier segment et un deuxième segment d'une tuyère propulsive en matériaux thermiquement dissimilaires, chacun desdits segments comprenant une pluralité d'orifices radiaux. Ce procédé comprend au moins les étapes suivantes :
Tout d'abord, l'introduction de douilles excentriques dans les orifices radiaux du deuxième segment de tuyère, chaque douille présentant une surface axisymétrique intérieure et une surface axisymétrique extérieure excentrée par rapport à ladite surface axisymétrique intérieure.

Ensuite, la mise en appui d'un épaulement radial du premier segment contre un épaulement radial du deuxième segment, lesdits orifices radiaux du premier segment étant mis en regard d'orifices correspondants parmi les orifices radiaux du deuxième segment.

Finalement, l'introduction de goupilles dans les orifices radiaux, chaque goupille présentant une première surface axisymétrique destinée à être logée dans un orifice radial du premier segment de tuyère et une deuxième surface axisymétrique de la même pièce de liaison, excentrée par rapport à la première surface axisymétrique et complémentaire de la surface axisymétrique intérieure d'une desdites douilles excentriques. La première surface axisymétrique de la goupille est alignée avec l'orifice radial du premier segment de tuyère par rotation de la goupille et de la douille excentrique dans l'orifice radial correspondant du deuxième segment.

Ainsi, grâce à l'excentricité de la goupille et de la douille, il est possible d'adapter la géométrie du dispositif de liaison formé par chaque couple douille-goupille à des différentes positions relatives, dans la direction axiale de la tuyère, des orifices radiaux du premier segment par rapport aux orifices radiaux du deuxième segment, pour ainsi au moins maintenir une précontrainte entre les deux segments dans cette direction.

Afin d'obtenir une précontrainte précise entre les deux éléments, celle-ci peut être introduite par des outillages externes lors de la mise en appui de l'épaulement radial du premier segment contre un épaulement radial du deuxième segment. Ces outillages externes peuvent être, par exemple, des doigts de traction ou des serre-joints. Alternativement, toutefois, il est aussi envisageable d'introduire la précontrainte par la rotation de la goupille et de la douille excentrique dans l'orifice radial correspondant du deuxième segment.

Ce procédé peut comprendre en outre une étape supplémentaire de mise en place d'au moins un organe de rétention axiale desdites goupilles, afin de les retenir dans les orifices radiaux des segments de tuyère.

Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

- la figure 1 est une vue schématique partielle en coupe longitudinale d'un moteur-fusée comprenant une tuyère en deux segments en matériaux thermiquement dissimilaires ;
- la figure 2A est une perspective écorchée de la jonction entre les deux segments de tuyère reliés par un dispositif de liaison suivant un premier mode de réalisation ;
- la figure 2B est une perspective explosée de la jonction de la figure 2A ;
- la figure 3 est une vue en perspective de la douille et de la goupille du dispositif de liaison de la figure 2 ;
- la figure 4 illustre la mise en appui des deux segments de tuyère de la figure 2 l'un contre l'autre ;
- les figures 5A à 5C illustrent l'ajustement du dispositif de liaison de la figure 2 par rotation de la douille et de la goupille ;
- la figure 6 est une perspective écorchée de la jonction entre les deux segments de tuyère reliés par un dispositif de liaison suivant un deuxième mode de réalisation ; et

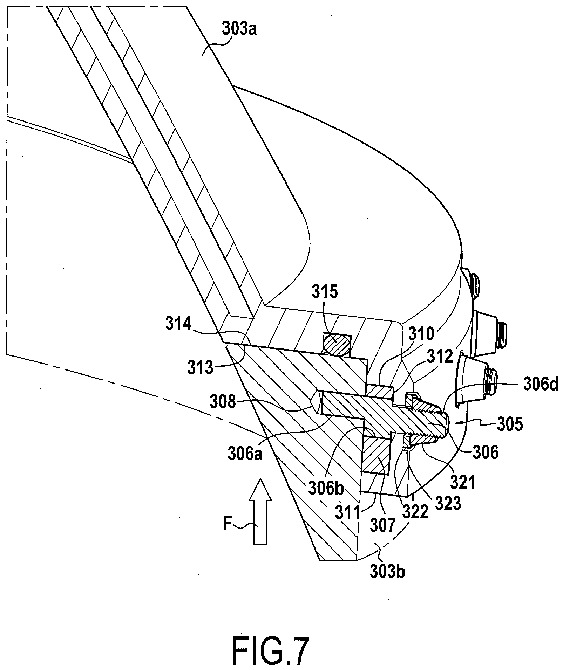

- la figure 7 est une perspective écorchée de la jonction entre les deux segments de tuyère reliés par un dispositif de liaison suivant un troisième mode de réalisation.

Description détaillée de l'invention

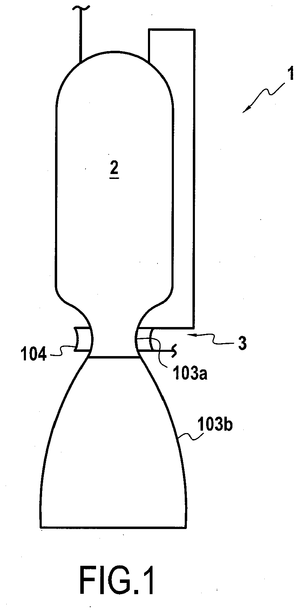

La figure 1 illustre partiellement un moteur fusée 1, et plus spécifiquement un ensemble de chambre propulsive formée par une chambre de combustion 2 prolongée par une tuyère convergente-divergente 3. Afin d'alléger cet ensemble, la tuyère convergente-divergente 3 est formée par deux segments 103a, 103b : un goulot 103a et un divergent 103b. Le goulot 103a est formé intégralement avec la chambre de combustion 2 en matériau métallique à haute tenue thermique et, dans l'exemple illustré, présente des conduits 104 de refroidissement régénératif par échange de chaleur avec un ergol du moteur fusée 1. Le divergent 103b, par contre, est en matériau composite, par exemple des composites à matrice céramique de type CC (Carbone/Carbone), C-SiC ou SiC-SiC, utilisant des fibres de carbone ou de carbure de silicium.

A cause de la plus grande conductivité thermique du matériau métallique du goulot 103a, et de son refroidissement régénératif par l'ergol circulant par les conduits 104, la température du goulot 103a à proximité de sa jonction avec le divergent 103b peut être sensiblement moindre que celle du divergent 103b dans la même zone. En outre, le métal du goulot 103a présente normalement un coefficient de dilatation thermique sensiblement différent de celui du matériau composite du divergent 103b. Il en résulte des contraintes particulières pour la liaison mécanique de ces deux segments 103a, 103b.

Ainsi, dans une liaison classique à brides radiales et boulons, les boulons souffriraient, pendant le fonctionnement du moteur fusée, d'une part une forte contrainte en cisaillement à cause de la dilatation thermique différente des deux segments de tuyère, et d'autre part un échauffement inégal tendant à dilater les boulons et donc desserrer cette liaison. Une telle liaison est donc normalement inadaptée à cette application.

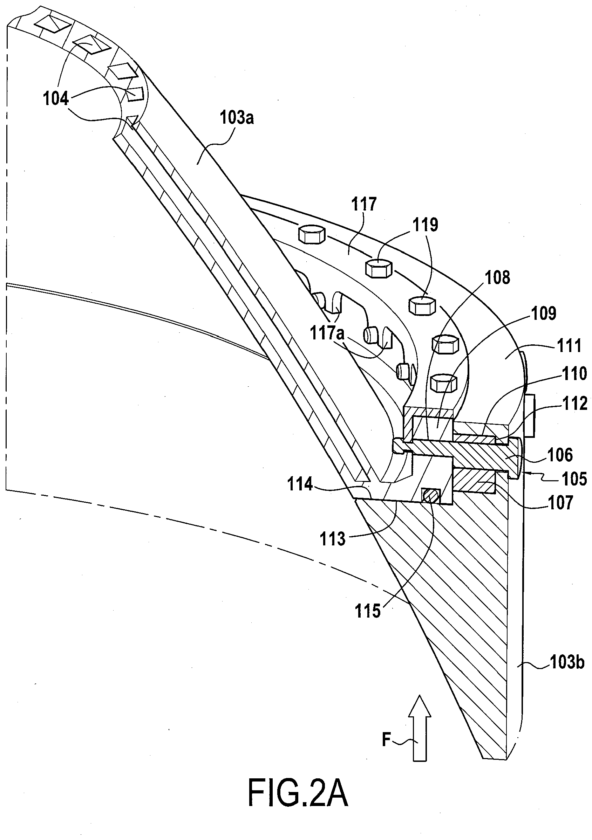

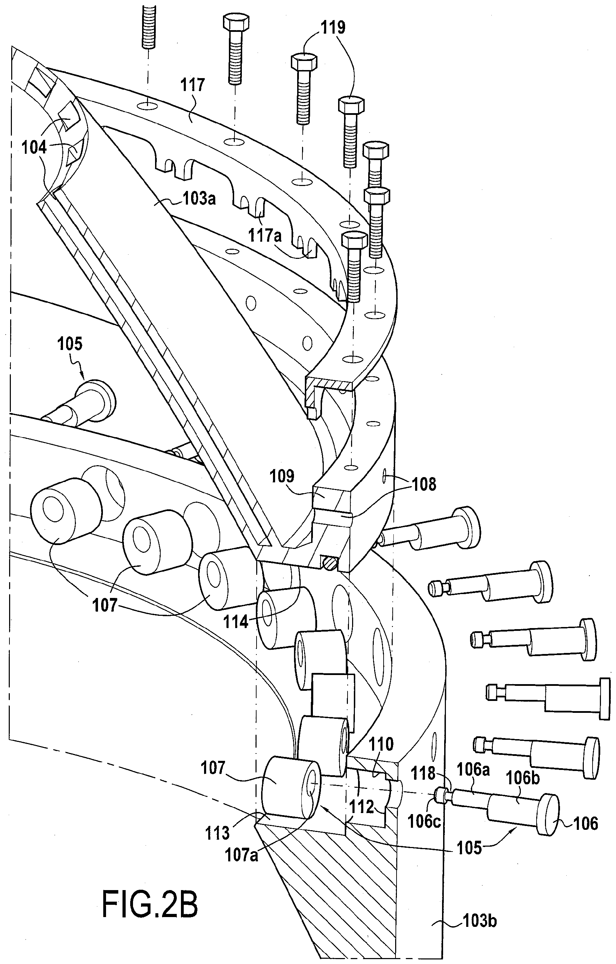

Les figures 2A et 2B illustrent une liaison suivant un premier mode de réalisation qui vise à résoudre ces inconvénients. Cette liaison entre le goulot 103a et le divergent 103b est assurée par une série de dispositifs de liaison 105 comprenant chacun une goupille 106 et une douille 107 et arrangés tout autour de la tuyère. Ces dispositifs de liaison 105 maintiennent une précontrainte F en appui d'un épaulement radial 113 du divergent 103b contre un épaulement radial correspondant 114 du goulot 103a. Un anneau d'étanchéité 115 entre ces épaulements 113, 114 assure l'étanchéité du joint entre le goulot 103a et le divergent 103b. Chaque goupille 106 est logée d'un côté dans un orifice radial 108 d'une couronne 109 du goulot 103a, et de l'autre côté à l'intérieur de la douille 107, laquelle est logée à son tour dans un orifice radial correspondant 110 d'une couronne 111 du divergent 103b. Cet orifice radial 110 présente un épaulement 112 contre lequel la douille 107 vient en butée.

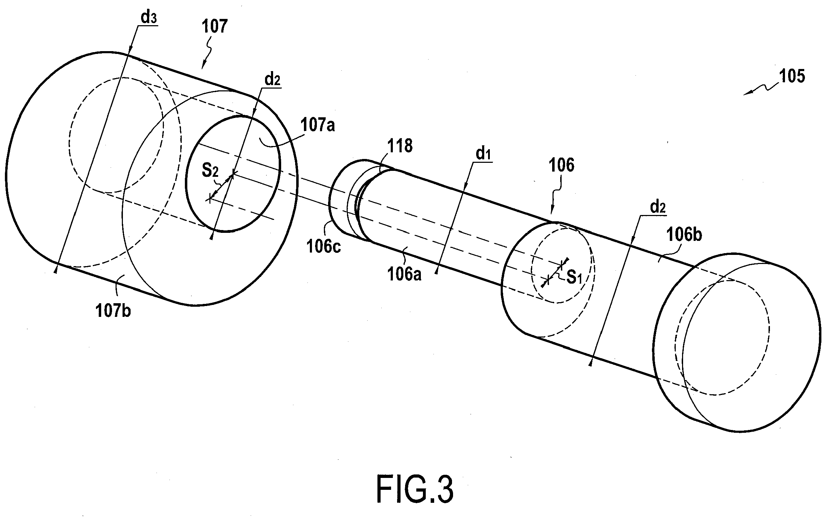

La goupille 106 et la douille 107 sont plus clairement visibles sur les figures 2B et 3. Ainsi, la goupille 106 présente deux surfaces axisymétriques 106a, 106b, plus spécifiquement cylindriques, excentrées l'une par rapport à l'autre. Sa première surface 106a, qui présente un diamètre $d_1$, est destinée à être logée dans l'orifice radial d'un premier segment de tuyère, dans l'occurrence dans l'orifice radial 108 de la couronne 109 du goulot 103a, tandis que sa deuxième surface 106b, qui présente un diamètre $d_2$ plus grand que le diamètre $d_1$ de la première surface 106a, est destinée à être logée à l'intérieur de la douille 107. Le décalage $s_1$ entre les axes de la première surface 106a et la deuxième surface 106b est égal ou inférieur à la différence entre ces deux diamètres $d_1$, $d_2$. La douille 107 est également excentrique, avec une surface axisymétrique interne 107a et une surface axisymétrique externe 107b dont les axes de symétrie sont sensiblement parallèles et décalés d'une distance $s_2$. Dans le mode de réalisation illustré, le décalage $s_1$ des axes de la goupille 106 est sensiblement égal au décalage $s_2$ des axes de la douille 107. Alternativement, toutefois, ils pourraient être différents.

La deuxième surface axisymétrique 106b de la goupille 106 est logée avec un léger jeu radial à l'intérieur de la surface axisymétrique interne 107a de la douille 107, de manière à permettre une rotation relative entre les deux pièces, mais sans permettre un déplacement relatif sensible perpendiculairement à l'axe de rotation. De manière analogue, la première surface axisymétrique 106a de la goupille 106 et la surface axisymétrique extérieure 107b de la douille 107 sont aussi logées avec un léger jeu radial à l'intérieur de, respectivement, l'orifice 108 de la couronne 109 et l'orifice radial correspondant 110 de la couronne 111.

Pour éviter que les goupilles 106 ne puissent s'échapper des orifices radiaux 108, l'ensemble comprend aussi un organe de rétention axiale sous la forme d'un anneau 117 fixé par des vis 119 sur la couronne 109 du goulot 103a. Des projections axiales 117a de cet anneau 117 engagent une rainure annulaire 118 autour d'une extrémité intérieure 106c de chaque goupille 106 en saillie par rapport à l'orifice 108, afin de retenir chaque goupille 106.

La liaison illustrée sur la figure 2 peut être mise en place selon le procédé suivant :

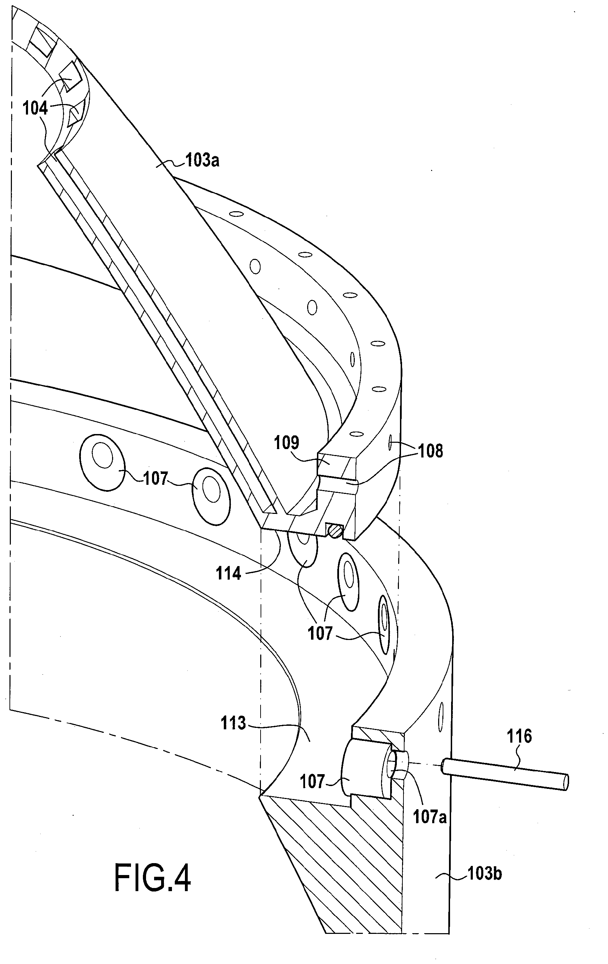

Dans une première étape, les douilles 107 sont reçues à l'intérieur des orifices radiaux 110 de la couronne 111 du divergent 103b, chacune venant en butée contre l'épaulement 112 de l'orifice 110 correspondant. Ensuite, le divergent 103b est mis en appui contre le goulot 103a comme illustré sur la figure 4. Pour cela, trois doigts 116 sont insérés par l'extérieur dans trois des orifices 110 de la couronne 111 du divergent 103b. Ces trois doigts 116 peuvent être situés avec des intervalles de 120° dans un plan transversal, de manière à assurer un équilibre entre eux, et exercent la force de précontrainte F sur le divergent 103b. Alternativement ou en complément à ces doigts 116, d'autres moyens peuvent être envisagés pour introduire et maintenir initialement cette précontrainte F, comme par exemple des serre-joints conventionnels. Le choix des moyens d'introduction de précontrainte dépendra notamment de la géométrie des deux pièces mises en appui l'une de l'autre.

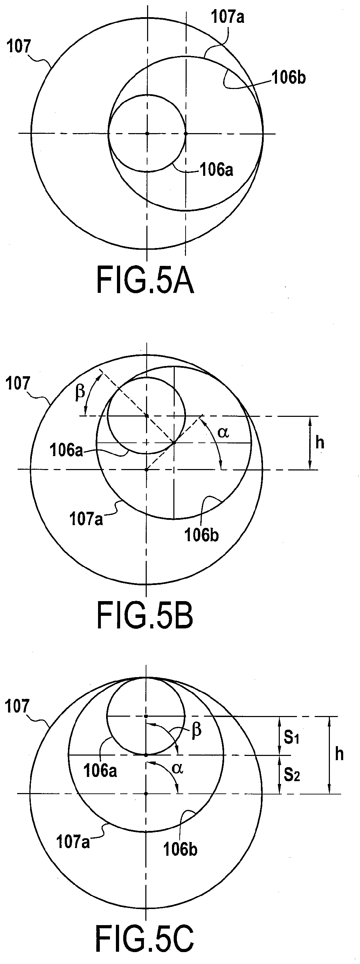

Ensuite, pendant que cette précontrainte F est maintenue entre les épaulements radiaux opposées 113,114 du goulot 103a et du divergent 103b, les goupilles 106 sont introduites à travers les orifices 110 restants. Afin de précisément aligner chaque goupille 106 avec l'orifice 108 correspondant dans la couronne 109, la goupille 106 et la douille 107 peuvent tourner dans l'orifice 110 de la manière illustrée sur les figures 5A à 5C. Comme l'on peut apprécier sur ces figures, l'excentricité de la goupille 106 dans la douille 107, et celle de la première surface axisymétrique 106a de la goupille 106 par rapport à sa deuxième surface axisymétrique 106b permettent en effet un ajustement vertical h de la position de la première surface axisymétrique 106a dans la direction de la précontrainte F suivant la formule suivante :

$$ h = s_1 \sin \alpha + s_2 \sin \beta $$

dans laquelle les angles $\alpha$ et $\beta$ sont les angles de rotation de, respectivement, la goupille 106 et la douille 107 à partir de la position illustrée sur la figure 5A. On entend ici par « verticale » une direction parallèle à l'axe central de la tuyère 3.

Si les décalages $s_1$ et $s_2$ sont sensiblement égaux, et l'ajustement purement vertical, comme dans l'exemple illustré, les angles de rotation $\alpha$ et $\beta$ seront sensiblement identiques, et la valeur de la distance h d'ajustement suivra la formule :

$$ h = 2s_1 \sin \alpha $$

Après l'introduction des goupilles 106, à travers les orifices 110 non occupés par les doigts 116, dans les orifices 108 correspondants, les doigts 116 sont retirés, et les goupilles 106 installées reprennent la précontrainte F. Les trois orifices 110 désormais libérés par les doigts 116 peuvent encore recevoir des goupilles 106 respectives, dont les extrémités intérieures 106c seront alignées avec les orifices 108 correspondants de la même manière. Chaque dispositif de liaison 105 est autobloquant, dans le sens que les dimensions de la goupille 106 et de la douille 107 et les coefficients de frottement entre les différentes surfaces en contact sont tels que ni la précontrainte F ni les contraintes supplémentaires pendant le fonctionnement du moteur fusée 1 ne puissent plus les faire tourner pour relâcher cette précontrainte.

Finalement, l'anneau 117 est mis en place, engageant les rainures annulaires 118 des goupilles 106 afin de les retenir, et fixé par les vis 119 sur la couronne 109.

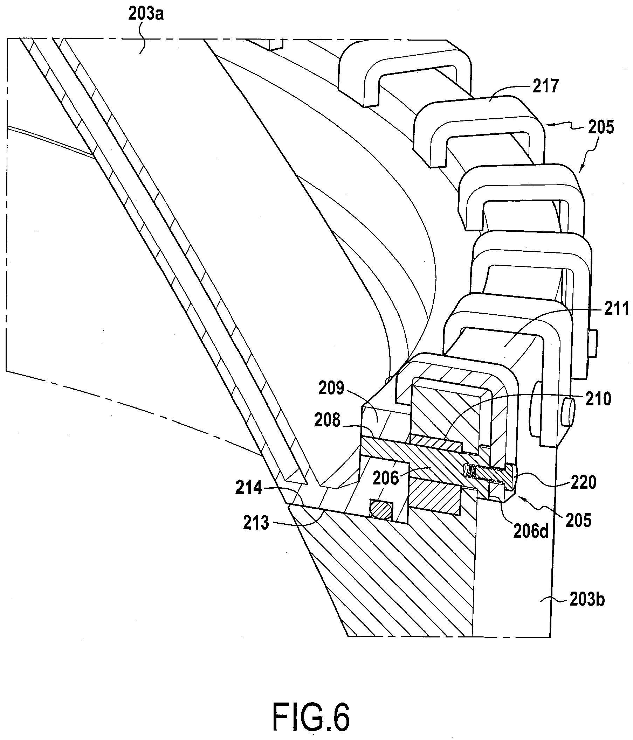

L'organe de rétention axiale des goupilles peut prendre des formes alternatives à l'anneau 117 de ce premier mode de réalisation. Ainsi, suivant un deuxième mode de réalisation illustré sur la figure 6, chaque goupille 206 est retenue individuellement par un étrier 217 en appui sur un bord intérieur de la couronne 211 et relié à une extrémité extérieure 206d de la goupille 206 par une vis 220. Dans le procédé de liaison suivant ce deuxième mode de réalisation, chaque étrier 217 est posé individuellement sur la couronne 211 et relié ensuite à la goupille 206 correspondante. Ceci sert non seulement à retenir axialement la goupille 206, mais en même temps, à cause du frottement entre la tête de la vis 220 et la surface de l'étrier 217, crée une résistance supplémentaire à la rotation des différents éléments de ce dispositif de liaison 205 dans les orifices 208, 210 des couronnes 209, 211 après sa pose, de manière à maintenir la précontrainte entre les épaulements 213 et 214 des segments de tuyère 203a,203b. A part cela, le reste des éléments de cette tuyère sont équivalents à ceux de la tuyère suivant le premier mode de réalisation, installés de forme analogue.

Bien que, dans les premier et deuxième modes de réalisation la couronne du segment de tuyère en aval, c'est-à-dire du divergent, entoure celle du segment de tuyère en amont, cet arrangement peut aussi être inversé. Dans un troisième mode de réalisation, illustré sur la figure 6, la liaison entre le goulot 303a et le divergent 303b d'une tuyère est aussi assurée par une série de dispositifs de liaison 305 comprenant chacun une goupille 306 et une douille 307 et arrangés tout autour de la tuyère. Comme dans les deux premiers modes de réalisation, ces dispositifs de liaison 305 maintiennent une précontrainte F en appui d'un épaulement radial 313 du divergent 303b contre un épaulement radial correspondant 314 du goulot 303a. Un anneau d'étanchéité 315 entre ces épaulements 313, 314 assure aussi l'étanchéité du joint entre le goulot 303a et le divergent 303b. Toutefois, dans ce troisième mode de réalisation, chaque goupille 306 est logée d'un côté dans un orifice radial borgne 308 du divergent 303b, et de l'autre côté à l'intérieur de la douille 307, laquelle est logée à son tour dans un orifice radial correspondant 310 d'une couronne 311 du goulot 303a placée autour du divergent 303b. Cet orifice radial 310 présente un épaulement 312 contre lequel la douille 307 vient en butée. Tant la goupille 306 comme la douille 307 sont excentriques de manière analogue à celles des deux modes de réalisation précédents. Ainsi, l'excentricité de la goupille 306 dans la douille 307, et celle de la première surface axisymétrique 306a de la goupille 306 par rapport à sa deuxième surface axisymétrique 306b permettent un ajustement vertical de la position de la première surface axisymétrique 306a dans la direction de la précontrainte F de manière analogue aux premier et deuxième modes de réalisation. Dans ce troisième mode de réalisation, les dispositifs de liaison 305 ne comportent pas d'organe de rétention axiale de la goupille 306. Toutefois, afin d'augmenter la résistance à la rotation de la goupille 306 et de la douille 307 après l'ajustement vertical de chaque goupille 306, chaque goupille 306 reçoit un écrou 321 sur un filetage extérieur de son extrémité extérieure 306d de la goupille 306. Cet écrou 321 prend appui sur une surface extérieure 322 de la couronne 311 à travers une rondelle 323, afin d'augmenter la résistance par frottement au déplacement des différents éléments de chaque dispositif de liaison 305.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Dispositif (105,205,305) pour relier un premier segment (103a,203a,303b) et un deuxième segment (103b,203b,303a) d'une tuyère propulsive (3) en matériaux thermiquement dissimilaires, **caractérisé en ce que** ledit dispositif (105,205,305) comprend au moins :

    une goupille (106,206,306) avec une première surface axisymétrique (106a,306a) destinée à être logée dans un orifice radial (108,208,308) du premier segment de tuyère (103a,203a,303b) et une deuxième surface axisymétrique (106b,306b) excentrée par rapport à ladite première surface axisymétrique (106a,306a) ; et
    une douille excentrique (107, 307) présentant une surface axisymétrique intérieure (107a) complémentaire de la deuxième surface axisymétrique (106b, 306b) de la goupille (106,206,306), et une surface axisymétrique extérieure (107b), excentrée par rapport à ladite surface axisymétrique intérieure (107a) et destinée à être logée dans un orifice radial (110,210,310) du deuxième segment de tuyère (103b,203b,303a).

2. Dispositif (105,205,305) suivant la revendication 1 avec sensiblement un même décalage radial entre des axes de symétrie des surfaces axisymétriques intérieure et extérieure (107a, 107b) de la douille excentrique (107,207,307) qu'entre des axes de symétrie des première et deuxième surfaces axisymétriques (106a,306a ; 106b,306b) de la goupille (106,206,306).

3. Dispositif (105,205) suivant l'une quelconque des revendications 1 ou 2, comprenant en outre au moins un organe (117,217) de rétention axiale de ladite goupille (106,206).

4. Dispositif (105) suivant la revendication 3, comprenant en outre des organes (119) de fixation dudit organe (117) de rétention axiale à l'un desdits segments de tuyère (103b).

5. Dispositif (105,205,305) suivant l'une quelconque des revendications précédentes, dans lequel au moins une partie desdites surfaces axisymétriques (106a, 306a ; 106b, 306b ; 107a ; 107b) sont cylindriques.

6. Tuyère propulsive (3) comprenant :

    un premier segment (103a,203a,303b) et un deuxième segment (103b,203b,303a) de tuyère en matériaux thermiquement dissimilaires, comprenant chacun un épaulement radial en appui contre un épaulement radial correspondant de l'autre desdits segments, ainsi qu'une pluralité d'orifices radiaux en regard à des orifices correspondants de l'autre desdits segments ; et
    une pluralité de dispositifs de liaison (105,205,305) suivant l'une quelconque des revendications 1 à 5, dont la première surface axisymétrique (106a, 306a) de la goupille (106,206,306) de chacun est logée dans un desdits orifices radiaux (108,208,308) du premier segment (103a,203a,303b) et la douille excentrique (107, 307) dans l'orifice radial correspondant (110,210,310) du deuxième segment (103b,203b,303a), la deuxième surface axisymétrique (106b, 306b) de la goupille (106,206,306) coopérant avec la surface axisymétrique intérieure (107a) de la douille excentrique (107,207,307).

7. Tuyère propulsive (3) suivant la revendication 6, dans laquelle chaque douille excentrique (107,207,307) est retenue entre une surface extérieure du premier segment de tuyère (103a,203a,303b) et un épaulement (112, 312) dans l'orifice radial (110,210,310) du deuxième segment de tuyère (103b,203b,303a) dans lequel la douille excentrique (107,207,307) est logée.

8. Moteur fusée (1) comprenant une tuyère propulsive (3) suivant l'une quelconque des revendications 6 ou 7.

**9.** Procédé de liaison d'un premier segment (103a,203a,303b) et un deuxième segment (103b,203b,303a) d'une tuyère propulsive (3) en matériaux thermiquement dissimilaires, chacun desdits segments (103a,203a,303b ; 103b,203b,303a) comprenant une pluralité d'orifices radiaux, le procédé comprenant les étapes suivantes :

introduction de douilles excentriques (107,207,307) dans les orifices radiaux (110,210,310) du deuxième segment de tuyère (103b,203b,303a), chaque douille (107,207,307) présentant une surface axisymétrique intérieure (107a,207a,307a) et une surface axisymétrique extérieure (107b) excentrée par rapport à ladite surface axisymétrique intérieure (107a) ;

mise en appui d'un épaulement radial (114,214,313) du premier segment (103a,203a,303b) contre un épaulement radial (113,213,314) du deuxième segment (103b,203b,303a), les orifices radiaux (108,208,308) du premier segment (103a,203a,303b) étant mis en regard d'orifices correspondants parmi les orifices radiaux (110,210,310) du deuxième segment (103b,203b,303a) ; et

introduction de goupilles (106,206,306) dans les orifices radiaux, chaque goupille (106,206,306) présentant une première surface axisymétrique (106a, 306a) destinée à être logée dans un orifice radial (108,208,308) du premier segment de tuyère (103a,203a,303b) et une deuxième surface axisymétrique (106b, 306b) de la même goupille (106,206,306), excentrée par rapport à la première surface axisymétrique (106a,306a) et complémentaire de la surface axisymétrique intérieure (107a) d'une desdites douilles excentriques (107,207,307), ladite première surface axisymétrique (106a, 306a) de la goupille (106,206,306) étant alignée avec l'orifice radial (108,208,308) du premier segment de tuyère (103a,203a,303b) par rotation de la goupille (106,206,306) et de la douille excentrique (107,207,307) dans l'orifice radial correspondant (110,210,310) du deuxième segment (103b,203b,303a).

**10.** Procédé suivant la revendication 9, comprenant en outre une étape de mise en place d'au moins un organe de rétention axiale (117,217) desdites goupilles (106,206), afin de les retenir dans les orifices radiaux des segments de tuyère.

**11.** Procédé suivant l'une quelconque des revendications 9 ou 10, dans lequel une précontrainte (F) entre lesdits segments (103a,203a,303b ; 103b,203b,303a) est introduite par des outillages externes lors de la mise en appui de l'épaulement radial (114,214,313) du premier segment (103a,203a,303b) contre épaulement radial (113,213,314) du deuxième segment (103b,203b,303a).

**Patentansprüche**

**1.** Vorrichtung (105, 205, 305) zum Verbinden eines ersten Abschnitts (103a, 203a, 303b) und eines zweiten Abschnitts (103b, 203b, 303a) einer Schubdüse (3) aus thermisch ungleichen Materialien, **dadurch gekennzeichnet, dass** die Vorrichtung (105, 205, 305) mindestens umfasst:

einen Stift (106, 206, 306) mit einer ersten achsensymmetrischen Fläche (106a, 306a), die dazu vorgesehen ist, in einer radialen Öffnung (108, 208, 308) des ersten Abschnitts (103a, 203a, 303b) der Düse untergebracht zu werden, und einer zweiten achsensymmetrischen Fläche (106b, 306b), die in Bezug auf die erste achsensymmetrische Fläche (106a, 306a) exzentrisch ist, und

eine exzentrische Hülse (107, 307), die eine innere achsensymmetrische Fläche (107a), die zu der zweiten achsensymmetrischen Fläche (106b, 306b) des Stifts (106, 206, 306) komplementär ist, und eine äußere achsensymmetrische Fläche (107b) aufweist, die in Bezug auf die innere achsensymmetrische Fläche (107a) exzentrisch ist und dazu vorgesehen ist, in einer radialen Öffnung (110, 210, 310) des zweiten Abschnitts (103b, 203b, 303a) der Düse untergebracht zu werden.

**2.** Vorrichtung (105, 205, 305) nach Anspruch 1 mit im Wesentlichen dem gleichen Radialversatz zwischen den Symmetrieachsen der inneren und äußeren achsensymmetrischen Fläche (107a, 107b) der exzentrischen Hülse (107, 207, 307) wie zwischen den Symmetrieachsen der ersten und zweiten achsensymmetrischen Fläche (106a, 306a; 106b, 306b) des Stifts (106, 206, 306).

**3.** Vorrichtung (105, 205) nach einem der Ansprüche 1 oder 2, ferner umfassend mindestens ein Bauteil (117, 217) zum axialen Zurückhalten des Stifts (106, 206).

**4.** Vorrichtung (105) nach Anspruch 3, ferner umfassend Bauteile (119) zur Befestigung des Bauteils (117) zum axialen Zurückhalten an einem der Abschnitte (103b) der Düse.

**5.** Vorrichtung (105, 205, 305) nach einem der vorhergehenden Ansprüche, wobei mindestens ein Teil der achsensymmetrischen Flächen (106a, 306a; 106b, 306b; 107a; 107b) zylindrisch ist.

6. Schubdüse (3), umfassend:

einen ersten Abschnitt (103a, 203a, 303b) und einen zweiten Abschnitt (103b, 203b, 303a) der Düse aus thermisch ungleichen Materialien, jeweils umfassend eine radiale Schulter, die auf einer radialen Schulter aufliegt, die zu dem anderen der Abschnitte gehört, sowie eine Vielzahl radialer Öffnungen gegenüber den Öffnungen, die zu dem anderen der Abschnitte gehören, und

eine Vielzahl von Verbindungsvorrichtungen (105, 205, 305) nach einem der Ansprüche 1 bis 5, wobei die erste achsensymmetrische Fläche (106a, 306a) des Stifts (106, 206, 306) von jeder in einer der radialen Öffnungen (108, 208, 308) des ersten Abschnitts (103a, 203a, 303b) und der exzentrischen Hülse (107, 307) in der entsprechenden radialen Öffnung (110, 210, 310) des zweiten Abschnitts (103b, 203b, 303a) untergebracht ist, wobei die zweite achsensymmetrische Fläche (106b, 306b) des Stifts (106, 206, 306) mit der inneren achsensymmetrischen Fläche (107a) der exzentrischen Hülse (107, 207, 307) zusammenwirkt.

7. Schubdüse (3) nach Anspruch 6, wobei jede exzentrische Hülse (107, 207, 307) zwischen einer äußeren Fläche des ersten Abschnitts (103a, 203a, 303b) der Düse und einer Schulter (112, 312) in der radialen Öffnung (110, 210, 310) des zweiten Abschnitts (103b, 203b, 303a) der Düse zurückgehalten wird, in dem die exzentrische Hülse (107, 207, 307) untergebracht ist.

8. Raketentriebwerk (1), umfassend eine Schubdüse (3) nach einem der Ansprüche 6 oder 7.

9. Verfahren zur Verbindung eines ersten Abschnitts (103a, 203a, 303b) und eines zweiten Abschnitts (103b, 203b, 303a) einer Schubdüse (3) aus thermisch ungleichen Materialien, wobei jeder der Abschnitte (103a, 203a, 303b; 103b, 203b, 303a) eine Vielzahl radialer Öffnungen umfasst, wobei das Verfahren die folgenden Schritte umfasst:

Einführen der exzentrischen Hülsen (107, 207, 307) in die radialen Öffnungen (110, 210, 310) des zweiten Abschnitts (103b, 203b, 303a) der Düse, wobei jede Hülse (107, 207, 307) eine innere achsensymmetrische Fläche (107a, 207a, 307a) und eine äußere achsensymmetrische Fläche (107b) aufweist, die in Bezug auf die innere achsensymmetrische Fläche (107a) exzentrisch ist,

In-Auflage-Bringen einer radialen Schulter (114, 214, 313) des ersten Abschnitts (103a, 203a, 303b) auf einer radialen Schulter (113, 213, 314) des zweiten Abschnitts (103b, 203b, 303a), wobei die radialen Öffnungen (108, 208, 308) des ersten Abschnitts (103a, 203a, 303b) den entsprechenden Öffnungen unter den radialen Öffnungen (110, 210, 310) des zweiten Abschnitts (103b, 203b, 303a) gegenüberstehen, und Einführen der Stifte (106, 206, 306) in die radialen Öffnungen, wobei jeder Stift (106, 206, 306) eine erste achsensymmetrische Fläche (106a, 306a), die dazu vorgesehen ist, in einer radialen Öffnung (108, 208, 308) des ersten Abschnitts (103a, 203a, 303b) der Düse untergebracht zu werden, und eine zweite achsensymmetrische Fläche (106b, 306b) desselben Stifts (106, 206, 306) aufweist, die in Bezug auf die erste achsensymmetrische Fläche (106a, 306a) exzentrisch und zu der inneren achsensymmetrischen Fläche (107a) von einer der exzentrischen Hülsen (107, 207, 307) komplementär ist, wobei die erste achsensymmetrische Fläche (106a, 306a) des Stifts (106, 206, 306) mit der radialen Öffnung (108, 208, 308) des ersten Abschnitts (103a, 203a, 303b) der Düse durch eine Drehung des Stifts (106, 206, 306) und der exzentrischen Hülse (107, 207, 307) in der radialen Öffnung (110, 210, 310) ausgerichtet ist, die zu dem zweiten Abschnitt (103b, 203b, 303a) gehört.

10. Verfahren nach Anspruch 9, ferner umfassend einen Schritt des Einsetzens von mindestens einem Bauteil (117, 217) zum axialen Zurückhalten der Stifte (106, 206), um sie in den radialen Öffnungen der Abschnitte der Düse zurückzuhalten.

11. Verfahren nach einem der Ansprüche 9 oder 10, wobei eine Vorspannung (F) zwischen den Abschnitten (103a, 203a, 303b; 103b, 203b, 303a) durch externe Werkzeuge während des In-Auflage-Bringens der radialen Schulter (114, 214, 313) des ersten Abschnitts (103a, 203a, 303b) auf der radialen Schulter (113, 213, 314) des zweiten Abschnitts (103b, 203b, 303a) eingeführt wird.

**Claims**

1. A device (105,205,305) for connecting together a first segment (103a,203a,303b) and a second segment (103b,203b, 303a) of a propulsion nozzle (3) made of materials that are thermally dissimilar, **characterized in that** said device (105,205,305) comprises at least:

• a pin (106,206,306) with a first axisymmetric surface (106a,306a) that is to be housed in a radial orifice (108,208,308) of the first nozzle segment (103a,203a,303b) and a second axisymmetric surface (106b,306b) that is eccentric relative to said first axisymmetric surface (106a,306a); and
• an eccentric bushing (107, 307) presenting an inside axisymmetric surface (107a) complementary to the second axisymmetric surface (106b, 306b) of the pin (106,206,306), and an outside axisymmetric surface (107b), that is eccentric relative to said inside axisymmetric surface (107a) and that is to be housed in a radial orifice (110,210,310) of the second nozzle segment (103b, 203b, 303a).

2. A device (105,205,305) according to claim 1 having substantially the same radial offset between the axes of symmetry of the inside and outside axisymmetric surfaces (107a, 107b) of the eccentric bushing (107,207,307) as between the axes of symmetry of the first and second axisymmetric surfaces (106a,306a; 106b,306b) of the pin (106, 206, 306).

3. A device (105,205) according to any one of claims 1 or 2, further including at least one axial retention member (117,217) for axially retaining said pin (106,206).

4. A device (105) according to claim 3, further including fastener members (119) for fastening said axial retention member (117) to one of said nozzle segments (103b).

5. A device (105,205,305) according to claim 1, wherein at least some of said axisymmetric surfaces (106a, 306a; 106b, 306b; 107a; 107b) are cylindrical.

6. A propulsion nozzle (3) comprising:

• a first nozzle segment (103a,203a,303b) and a second nozzle segment (103b,203b,303a) made of thermally dissimilar materials, each having a radial shoulder bearing against a corresponding radial shoulder of the other one of said segments, together with a plurality of radial orifices facing corresponding orifices in the other one of said segments; and
• a plurality of connection devices (105,205,305) according to claim 1, wherein the first axisymmetric surface (106a, 306a) of the pin (106,206,306) of each of them is housed in one of said radial orifices (108,208,308) of the first segment (103a,203a,303b) and the eccentric bushing (107, 307) is housed in the corresponding radial orifice (110,210,310) of the second segment (103b,203b,303a), the second axisymmetric surface (106b, 306b) of the pin (106,206,306) co-operating with the inside axisymmetric surface (107a) of the eccentric bushing (107,207,307).

7. A propulsion nozzle (3) according to claim 6, wherein each eccentric bushing (107,207,307) is retained between an outer surface of the first nozzle segment (103a,203a,303b) and a shoulder (112, 312) in the radial orifice (110,210,310) of the second nozzle segment (103b,203b,303a) in which the eccentric bushing (107,207,307) is housed.

8. A rocket engine (1) including a propulsion nozzle (3) according to any one of claims 6 or 7.

9. A method of connecting together a first segment (103a, 203a,303b) and a second segment (103b,203b,303a) of a propulsion nozzle (3) that are made of thermally dissimilar materials, each of said segments (103a,203a,303b; 103b,203b,303a) including a plurality of radial orifices, the method comprising the following steps:

• inserting eccentric bushings (107,207,307) in the radial orifices (110,210,310) of the second nozzle segment (103b,203b,303a), each bushing (107,207,307) presenting an inside axisymmetric surface (107a,207a,307a) and an outside axisymmetric surface (107b) that is eccentric relative to said inside axisymmetric surface (107a);
• causing a radial shoulder (114,214,313) of the first segment (103a,203a,303b) to press against a radial shoulder (113,213,314) of the second segment (103b,203b,303a), the radial orifices (108,208,308) of the first segment (103a,203a,303b) being put into register with corresponding orifices among the radial orifices (110,210,310) of the second segment (103b,203b,303a); and
• inserting pins (106,206,306) in the radial orifices, each pin (106,206,306) presenting a first axisymmetric surface (106a, 306a) that is to be housed in a radial orifice (108,208,308) of the first nozzle segment (103a,203a,303b) and a second axisymmetric surface (106b, 306b) of the same pin (106,206,306), that is eccentric relative to the first axisymmetric surface (106a,306a) and complementary to the inside axisymmetric surface (107a) of one of said eccentric bushings (107,207,307), said first axisymmetric surface (106a, 306a) of the pin (106,206,306) being aligned with the radial orifice (108,208,308) of the first nozzle segment (103a,203a,303b) by turning the pin (106,206,306) and the eccentric bushing (107,207,307) in the corresponding radial orifice (110,210,310) of the second segment (103b, 203b, 303a).

10. A method according to claim 9, further including a step of installing at least one axial retention member (117,217) for axially retaining said pins (106,206), so as to retain them in the radial orifices of the nozzle segments.

11. A method according to any one of claims 9 or 10, wherein prestress (F) is imparted between said segments (103a,203a,303b; 103b,203b,303a) by external tooling while the radial shoulder (114,214,313) of the first segment (103a,203a,303b) is being caused to press against the radial shoulder (113,213,314) of the second segment (103b, 203b, 303a).

EP 3 017 172 B1

FIG.1

11

FIG.2A

FIG.2B

FIG.3

EP 3 017 172 B1

FIG.4

EP 3 017 172 B1

FIG.5A

FIG.5B

FIG.5C

16

FIG.6

FIG.7

**EP 3 017 172 B1**

## RÉFÉRENCES CITÉES DANS LA DESCRIPTION

### Documents brevets cités dans la description

- FR 2699970 A1